Europäisches Patentamt

European Patent Office

Office européen des brevets

(11) Veröffentlichungsnummer: **0 231 869**
**B1**

(12) **EUROPÄISCHE PATENTSCHRIFT**

(45) Veröffentlichungstag der Patentschrift:
09.05.90

(51) Int. Cl.⁵: **C09K 3/18**

(21) Anmeldenummer: **87101155.7**

(22) Anmeldetag: **28.01.87**

(54) Enteisungs- und Vereisungsschutzmittel für Flugzeuge.

(30) Priorität: 06.02.86 DE 3603583
21.10.86 DE 3635721

(43) Veröffentlichungstag der Anmeldung:
12.08.87 Patentblatt 87/33

(45) Bekanntmachung des Hinweises auf die Patenterteilung:
09.05.90 Patentblatt 90/19

(84) Benannte Vertragsstaaten:
AT BE CH DE FR GB IT LI NL SE

(56) Entgegenhaltungen:
EP-A- 0 050 700
DE-A- 1 940 825
US-A- 3 940 356

(73) Patentinhaber: HOECHST AKTIENGESELLSCHAFT,
Postfach 80 03 20, D-6230 Frankfurt am Main 80(DE)

(72) Erfinder: Salvador, René, Dr., Flurstrasse 7,
D-8265 Neuötting(DE)
Erfinder: Kapfinger, Josef, Kastenstrasse 7,
D-8269 Burgkirchen(DE)
Erfinder: Leidl, Erich, Kampenwandstrasse 24,
D-8269 Burgkirchen/Alz(DE)

**Beschreibung**

Die Erfindung betrifft ein Enteisungs- und Vereisungsschutzmittel für Flugzeuge auf der Basis von Glykolen und Wasser und mit vernetzten Acrylpolymeren als Verdikker.

Ein solches Mittel ist aus der US-Patentschrift 4,358,389 bekannt. Im einzelnen besteht es im wesentlichen aus

(1) 40 bis 65 Gew.-% von einem Glykol aus der Gruppe der Alkylenglykole mit 2 bis 3 Kohlenstoffatomen und Oxalkylenglykole mit 4 bis 6 Kohlenstoffatomen;

(2) 35 bis 60 Gew.-% Wasser;

(3) 0,05 bis 1,5 Gew.-% eines Verdickungsmittels aus der Gruppe der vernetzten Polyacrylate mit einer Viskosität von 1000 bis 50 000 mPa s in einer 0,5 gew.-%igen wäßrigen Lösung von 20 °C und einem pH-Wert von 7,5 bis 10 und mit einem laminaren Strömungsverhalten in einer 0,1 bis 1,5 gew.-%igen wäßrigen Lösung von +20 °C, 0 °C und -10 °C und einem pH-Wert von 7,5 bis 10 bei einer Schergeschwindigkeit bis zu mindestens 20 000 s$^{-1}$;

(4) 0,05 bis 1 Gew.-% einer wasserunlöslichen Komponente aus der Gruppe der gemischtbasischen Mineralöle;

(5) 0,05 bis 1 Gew.-% eines Tensides aus der Gruppe der Alkali-Alkylarylsulfonate;

(6) 0,01 bis 1 Gew.-% von mindestens einem Korrosionsinhibitor; und

(7) einer solchen Menge von mindestens einer alkalischen Verbindung aus der Gruppe der Alkalicarbonate, Alkali hydrogencarbonate, Alkalihydroxide und Amine, daß das Mittel einen pH-Wert von 7,5 bis 10 hat, wobei die Menge von den Komponenten a) und b) in dem Mittel mindestens 94 Gew.-%, bezogen auf das Gewicht des Mittels, beträgt.

Dieses bekannte Flugzeugenteisungs- und Vereisungsschutzmittel hat sich gut bewährt und wird auch schon vielfach eingesetzt. Es hat sich nun herausgestellt, daß dieses Mittel bei sehr tiefen Temperaturen, wie sie beispielsweise in arktischen Gegenden herrschen (das sind Temperaturen von etwa -20 bis etwa -35 °C), im Viskositäts-Temperaturverhalten noch zu wünschen übrig läßt. So zeigt es bei den in Mitteleuropa und ähnlichen Gegenden herrschenden Wintertemperaturen (das sind Temperaturen von etwa 0 bis etwa -15 °C) die geforderte Viskosität und dies auch bei niedrigen Schergeschwindigkeiten, das sind Schergeschwindigkeiten bis zu etwa 20 s$^{-1}$ ("low shear viscosity"). Bei Temperaturen von unter etwa -15 °C und insbesondere bei Temperaturen von etwa -20 bis etwa -35 °C zeigt es aber, vor allem bei niedrigen Schergeschwindigkeiten, eine zu hohe Vikosität; so liegt seine Viskosität beispielsweise bei -25 °C im Brookfield Viskosimeter bei 0,3 Umdrehungen pro Minute (UpM) bei 50 000 bis 60 000 mPa s (gewünscht wären Werte von 10 000 bis 40 000 mPa s). Wie sich dies in der Praxis auswirkt, soll nachstehend näher erläutert werden: Die auf der Flugzeug-Oberfläche, insbesondere auf den aerodynamisch wichtigen Oberflächenteilen, zur Enteisung und als Schutz gegen Wiedervereisung (während des Stehens des Flugzeugs am Boden) aufgebrachte Flüssigkeitsformulierung soll bekanntlich während des Startvorganges vollständig abfließen, so daß die dem Flugzeug eigene Aerodynamik (vor allem Auftrieb) während des Fluges gewährleistet ist. Beim bekannten Mittel geschieht dies auch in ganz zufriedenstellender Weise bei all den Oberflächenteilen, an denen hohe Schergeschwindigkeiten auftreten; in diesen Fällen nimmt die Viskosität des Mittels rasch ab, es wird also niederviskos und fließt schnell und vollständig ab. An jenen Oberflächenteilen aber, an denen relativ niedrige Schergeschwindigkeiten auftreten (das sind aerodynamisch relativ ruhige Oberflächenteile wie beispielsweise der hintere Teil des Flügels), fließt die bekannte Flüssigkeitsformulierung langsamer ab, insbesondere bei arktischen Temperaturen, so daß sich dann infolge zu langsamen Abfließens nach dem Startvorgang noch immer Flüssigkeit auf den genannten Teilen befindet. Dazu kommt noch, daß moderne Flugzeuge z. B. Flügelkonstruktionen aufweisen, die besonders sensibel auf Vereisung oder Verunreinigung reagieren. Diese Flügel müssen deshalb, um ihren vollen Auftrieb zu gewährleisten, absolut eis- und schneefrei sein. Deshalb ist bei diesen Flugzeugen auch schon bei Grenzbedingungen (+1 bis -2 °C) und bei nur geringem Frost ein Vereisungsschutz erforderlich. Hier wird ganz besonders ein optimales Abfließverhalten des aufgebrachten Mittels gefordert, um den vollen Auftrieb des Flügels schon beim Start, das heißt im Augenblick der Rotation, zur Verfügung zu haben.

Aus den obigen Ausführungen ergibt sich, daß das bekannte Flugzeugenteisungs- und Vereisungsschutzmittel unter Beibehaltung seiner guten "low shear viscosity" (Ruhe-Viskosität) bei etwa 0 bis etwa -15 °C so verbessert werden sollte, daß es auch bei Vorliegen einer Temperatur von unter -15 °C und insbesondere auch noch bei -20 bis etwa -35 °C nur einen relativ geringen Anstieg der Viskosität zeigt, um so ein gutes Abfließen auch bei niedrigen Schergeschwindigkeiten (das heißt an aerodynamisch ruhigeren Stellen) zu gewährleisten. Nachdem nämlich ein direkter Zusammenhang besteht zwischen der "holdovertime" (das ist jene Zeitspanne, in der durch das Enteisungsmittel - während der unvermeidlichen Verzögerung zwischen Enteisung und Start - Schutz gegen das Wiedervereisen bei gefrierendem Niederschlag gegeben ist) und der "Ruhe-Viskosität" bei einer Temperatur von etwa 0 bis etwa -15 °C, soll diese Viskosität des bekannten Mittels im wesentlichen beibehalten werden, seine Ruhe-Viskosität unter -15 °C aber beträchtlich abgesenkt werden, um das Ablaufverhalten des Mittels während des Startvorganges auch an aerodynamisch ruhigeren Stellen auf das gewünschte Maß zu bringen.

Es sollte also ein Flugzeugenteisungs- und Vereisungsschutzmittel zur Verfügung stehen, das die hohen Forderungen an die Viskosität beim Starten des Flugzeuges (aufgrund der dabei herrschenden aerodynamischen Verhältnisse) im gesamten Temperaturbereich von etwa 0 bis etwa -35 °C erfüllt.

Es wurde nun überraschenderweise gefunden, daß die Nachteile des bekannten Enteisungs- und Vereisungsschutzmittels dadurch beseitigt werden können und ein Mittel mit den erwähnten angestrebten Eigenschaften erhalten wird, wenn man als Verdicker eine bestimmte Mischung aus einem vernetzten Acrylsäure-Homopolymeren und einem ausgewählten vernetzten Acrylamid/Acrylsäure-Copolymeren oder Acrylamid/Alkalimetallacrylat-Copolymeren und als basische (alkalische) Verbindungen zur Einstellung des pH-Wertes des Mittels drei voneinander verschiedene und aufeinander abgestimmte Verbindungen in einer jeweils spezifischen Menge einsetzt, und zwar Ammoniak, Monoethanolamin, Diethanolamin und/oder Triethanolamin (erste basische Verbindung), Kaliumhydroxid (zweite basische Verbindung) und ein weiteres (anderes) Alkalimetallhydroxid (dritte basische Verbindung). Es hat sich herausgestellt, daß mit der genannten speziellen Kombination von Acrylpolymeren die gewünschte Viskosität und das gewünschte Strömungsverhalten des Mittels auch bei sehr tiefen Temperaturen und niedrigen Schergeschwindigkeiten erreicht werden kann, wenn zusätzlich gleichzeitig die drei genannten alkalischen Verbindungen vorliegen, von denen jede in eigenartiger Weise die beiden Acrylpolymeren beeinflußt, so zum Beispiel in der Quellung und in dem Viskositäts-Temperaturverhalten.

Das neue Enteisungs- und Vereisungsschutzmittel für Flugzeuge auf der Basis von Glykolen und Wasser und mit vernetzten Acrylpolymeren als Verdicker besteht im wesentlichen aus

a) 40 bis 70 Gew.-%, vorzugsweise 50 bis 60 Gew.-%, von einem Glykol aus der Gruppe der Alkylenglykole mit 2 bis 3 C-Atomen und Oxalkylenglykole mit 4 bis 6 C-Atomen,

b) 0,1 bis 1 Gew.-%, vorzugsweise 0,2 bis 0,7 Gew.-%, von vernetzten Acrylpolymeren, bestehend aus 1 Gew.-Teil von einem vernetzten Copolymeren aus Acrylsäure oder einem Alkalimetallacrylat und Acrylamid mit 10 bis 90 Gew.-%, vorzugsweise 20 bis 80 Gew.-%, copolymerisierten Einheiten der Acrylsäure oder des Alkalimetallacrylates und 10 bis 90 Gew.-%, vorzugsweise 20 bis 80 Gew.-%, copolymerisierten Einheiten des Acrylamids und 1 bis 10 Gew.-Teilen, vorzugsweise 3 bis 8 Gew.-Teilen, von einem vernetzten Homopolymeren der Acrylsäure oder eines Alkalimetallacrylates, mit der Maßgabe, daß das Homopolymere und das Copolymere jeweils eine Viskosität von 5000 bis 70 000 mPa s, vorzugsweise 10 000 bis 50 000 mPa s, und ein laminares Strömungsverhalten bei einer Schergeschwindigkeit von 0 bis 20 000 s$^{-1}$ besitzen, wobei die Viskosität und das laminare Strömungsverhalten jeweils mit Hilfe einer 0,5 gew.-%igen wäßrigen Lösung von 20 °C und einem pH-Wert von 7 mit einem Brookfield-Viskosimeter bei 20 UpM bzw. mit einem Rotationsviskosimeter für Schergeschwindigkeiten bis zu 20 000 s$^{-1}$ gemessen worden ist,

c) 0,05 bis 1 Gew.-%, vorzugsweise 0,1 bis 0,7 Gew.-%, von einem Tensid aus der Gruppe der Alkalimetall-Alkylarylsulfonate,

d) 0,01 bis 1 Gew.-%, vorzugsweise 0,03 bis 0,5 Gew.-%, von mindestens einem Korrosionsinhibitor,

e) den drei folgenden basischen Verbindungen $e_1$ bis $e_3$ in den angegebenen Mengen zur Einstellung des pH-Wertes des Mittels auf 7,5 bis 11, vorzugsweise 8 bis 10,

$e_1$) 0,01 bis 1 Gew.-%, vorzugsweise 0,05 bis 0,5 Gew.-%, Ammoniak, Monoethanolamin, Diethanolamin oder Triethanolamin oder eine Mischung davon (als dem ersten basischen Vertreter),

$e_2$) 0,05 bis 0,7 Gew.-%, vorzugsweise 0,07 bis 0,4 Gew.-%, Kaliumhydroxid (als dem zweiten basischen Vertreter) und

$e_3$) 0,01 bis 0,5 Gew.-%, vorzugsweise 0,03 bis 0,15 Gew.-%, von einem weiteren Alkalimetallhydroxid, vorzugsweise Natriumhydroxid (als dem dritten basischen Vertreter), und aus

f) Wasser als den restlichen Gewichtsprozenten, Gewichtsprozente jeweils bezogen auf das Gewicht des Mittels (Gewicht des fertigen Mittels oder der Gesamtmischung, das heißt, die Summe der Komponenten a) bis f) ist 100 Gewichtsprozent).

Die Komponente a) des erfindungsgemäßen Enteisungs- und Vereisungsschutzmittels ist vorzugsweise Ethylenglykol, Propylenglykol (1,2-Propylenglykol oder 1,3-Propylenglykol) und/oder Diethylenglykol.

Die Komponente b) umfaßt zwei ausgewählte, vernetzte Acrylpolymere in einem bestimmten Gewichtsverhältnis, und zwar ein vernetztes Homopolymeres aus Acrylsäure oder Alkalimetallacrylat, vorzugsweise Natrium- oder Kaliumacrylat, und ein vernetztes Copolymeres aus 10 bis 90 Gew.-%, vorzugsweise 20 bis 80 Gew.-%, copolymerisiertem Acrylamid und 10 bis 90 Gew.-%, vorzugsweise 20 bis 80 Gew.-%, copolymerisierter Acrylsäure oder copolymerisiertem Alkalimetallacrylat, vorzugsweise Natrium- oder Kaliumacrylat, Gewichtsprozente bezogen auf das Copolymere, wobei auf einen Gewichtsteil an dem Copolymeren 1 bis 10 Gewichtsteile, vorzugsweise 3 bis 8 Gewichtsteile,an dem Homopolymeren vorliegen. Von den beiden vernetzten Acrylpolymeren werden ferner jeweils solche eingesetzt, die eine bestimmte Viskosität und ein spezielles Strömungsverhalten besitzen, nämlich eine Viskosität von 5 000 bis 70 000 mPa s, vorzugsweise von 10 000 bis 50 000 mPa s, in einer 0,5 gew.-%igen wäßrigen Lösung von 20 °C und einem pH-Wert von 7 am Brookfield-Viskosimeter bei 20 UpM und ein laminares Strömungsverhalten in einer 0,5 gew.-%igen wäßrigen Lösung von 20 °C und einem pH-Wert von 7 bei einer Schergeschwindigkeit von 0 bis 20 000 s$^{-1}$ in einem Rotationsviskosimeter ("high shear rotation viscosi-

EP 0 231 869 B1

meter"); aus der erhaltenen Fließkurve (Viskositätsverlauf) bei Schergeschwindigkeiten von 0 s⁻¹ bis zu dem hohen Wert von 20 000 s⁻¹ ist ersichtlich, ob laminare oder nicht-laminare Strömung gegeben ist.

Die beiden erfindungsgemäß einzusetzenden Acrylpolymeren sind bekannt und im Handel erhältlich. Entscheidend ist, daß sie die obengenannten Merkmale und Eigenschaften aufweisen. Es handelt sich um vernetzte Acrylpolymere, die unter der Bezeichnung polyfunktionell statistisch vernetzte Acrylpolymere gehandelt werden. Das Homopolymere wird - wie beispielsweise in den beiden US-Patentschriften 2,798,053 und 2,923,692 ausführlich beschrieben ist - vorzugsweise durch Polymerisation von Acrylsäure oder Alkalimetallacrylat in Gegenwart eines radikalischen Inititators (Katalysators) und eines Vernetzers mit mindestens zwei polymerisierbaren Gruppen pro Molekül, vorzugsweise $CH_2=C<$-Gruppen, und Gewinnung des pulverförmigen Polymeren aus der Polymerdispersion hergestellt, wobei zur Polymerisation von Acrylsäure ein mit Wasser nicht mischbares organisches Lösungsmittel wie Benzol, Toluol, Hexan, Heptan und dergleichen, und zur Polymerisation des Acrylates Wasser oder eine wasserähnliche Flüssigkeit eingesetzt wird. Von den beiden vernetzten Homopolymeren, nämlich dem Homopolymeren aus Acrylsäure und dem Homopolymeren aus Alkalimetallacrylat, ist im Rahmen der Erfindung das erstgenannte bevorzugt. Das Copolymerre wird durch Copolymerisation von Acrylamid und Acrylsäure oder Alkalimetallacrylat in Gegenwart eines radikalischen Initiators und eines der obengenannten Vernetzungsmittel und Gewinnung des pulverförmigen Copolymeren aus der Copolymerdispersion hergestellt; auch die Copolymerisation wird mit Hilfe geeigneter Lösungsmittel durchgeführt (vgl. die beiden obengenannten US-Patentschriften). Eine weitere Methode zur Herstellung des Copolymeren ist in der US-Patentschrift 4,237,249 ausführlich beschrieben. Danach wird Acrylamid in Gegenwart eines radikalischen Initiators und eines der obenerwähnten Vernetzungsmittel in einem mit Wasser mischbaren Alkohol polymerisiert und die erhaltene Polymerdispersion mit einem Alkalimetallhydroxid, vorzugsweise Natrium- oder Kaliumhydroxid, behandelt, zur Verseifung einer entsprechenden Menge an Amidgruppen, um so auch die angestrebten Gewichtsprozente an Alkalimetallacrylat-Gruppen zu erhalten, worauf das pulverförmige Acrylamid/Alkalimetallacrylat-Copolymere gewonnen wird. Von den beiden vernetzten Copolymeren, nämlich dem Copolymeren aus Acrylsäure und Acrylamid und dem Copolymeren aus Alkalimetallacrylat und Acrylamid,ist im Rahmen der Erfindung das nach der Methode der US-Patentschrift 4,237,249 hergestellte Alkalimetallacrylat/Acrylamid-Copolymere bevorzugt.

Geeignete Vernetzer sind, wie aus den US-Patentschriften 2,798,053, 2,923,692 und 4,237,249 hervorgeht, solche aus der Gruppe der polyungesättigten (vorzugsweise 2- bis 5fach ungesättigten) Kohlenwasserstoffe wie Vinylbenzol, Divinylnaphthalin und Polybutadien, aus der Gruppe der polyungesättigten (vorzugsweise 2- bis 5fach ungesättigten) Ester wie Allylacrylat, Crotylacrylat, Ethylenglykoldiacrylat, Glycerindiacrylat, Glycerintriacrylat, Diallylphthalat, Diallyloxalat, Diallylcitrat und Triallylcitrat sowie die entsprechenden Methacrylate und Methallylester, und aus der Gruppe der polyungesättigten (vorzugsweise 2- bis 5fach ungesättigten) Ether wie Diallylether, Diallylethylenglykolether, Diallylpropylenglykolether, Di- oder Triallylether von Trimethylolethan oder Trimethylolpropan, Di- oder Triallylether von Glycerin (auch Polyglycerin, vorzugsweise Di- bis Decaglycerin), Tetraallyloxethan und Di-, Tri-, Tetra- oder Pentaallylether von Alkoholen der Zuckerreihe wie Erythrit, Pentaerythrit, Arabit, Xylit, Dulcit, Mannit, Sorbit, Glucose und Saccharose sowie die entsprechenden Methallylether. Bevorzugte Vernetzer sind jene aus der Gruppe der polyungesättigten Ether, worunter besonders bevorzugt sind der Diallylether, Di- oder Triallylglycerinether, Di- oder Triallyl-Trimethylolethanether, Di- oder Triallyl-Trimethylolpropanether, Tetraallyloxethan und Di-, Tri-, Tetra- oder Pentaallylether von Zuckeralkoholen sowie die entsprechenden Methallylether.

Die Menge an Vernetzer im Homopolymeren und im Copolymeren beträgt im allgemeinen 0,1 bis 10 Gew.-%, vorzugsweise 1 bis 5 Gew.-%, bezogen auf das Homo- bzw. Copolymere. Das erfindungsgemäß einzusetzende vernetzte Homopolymere besteht demnach im wesentlichen aus polmerisiertem Alkalimetallacrylat (das Alkalimetall ist vorzugsweise K oder Na) oder polymerisierter Acrylsäure (als dem Hauptbestandteil)und 0,1 bis 10 Gew.-%, vorzugsweise 1 bis 5 Gew.-%, polymerisiertem Vernetzer, Gewichtsprozente bezogen auf das Polymere, oder anders ausgedrückt, aus 90 bis 99,9 Gew.-%, vorzugsweise 95 bis 99 Gew.-%, polymerisiertem Alkalimetallacrylat oder polymerisierter Acrylsäure und 0,1 bis 10 Gew.-%, vorzugweise 1 bis 5 Gew.-%, polymerisiertem Vernetzer, Gewichtsprozente bezogen auf das Polymere. Von den beiden Polymeren ist - wie oben bereits erwähnt - das mit Acrylsäure als Hauptbestandteil (das Acrylsäurehomopolymere) bevorzugt.

Das erfindungsgemäß einzusetzende vernetzte Copolymere besteht nach den obigen Ausführungen im wesentlichen aus 10 bis 90 Gew.-%, vorzugsweise 20 bis 80 Gew.-%, polymerisiertem Alkalimetallacrylat (das Alkalimetall ist vorzugsweise K oder Na) oder polymerisierter Acrylsäure und 10 bis 90 Gew.-%, vorzugsweise 20 bis 80 Gew.-%, polymeri siertem Acrylamid sowie 0,1 bis 10 Gew.-%, vorzugsweise 1 bis 5 Gew.-%, polymerisiertem Vernetzer, Gewichtsprozente bezogen auf das Polymere (das heißt, die Summe aus polymerisiertem Alkalimetallacrylat oder Acrylsäure, Acrylamid und Vernetzer ist 100 Gew.-%); anders ausgedrückt besteht das vernetzte Copolymere im wesentlichen aus beispielsweise 10 bis 89,9 Gew.-%, vorzugsweise 20 bis 75 Gew.-%, polymerisiertem Alkalimetallacrylat oder Acrylsäure, 10 bis 89,9 Gew.-%, vorzugsweise 20 bis 75 Gew.-%, polymerisiertem Acrylamid und 0,1 bis 10 Gew.-%, vorzugsweise 1 bis 5 Gew.-%, polymerisiertem Vernetzer, Gewichtsprozente bezogen auf das Polymere. Von den beiden Polymeren ist - wie oben bereits erwähnt - das aus Alkalimetallacrylat, Acrylamid und Vernetzer, hergestellt nach den Verfahren der US-Patentschrift 4,237,249, bevorzugt.

4

Die Komponente c) des erfindungsgemäßen Enteisungs- und Vereisungsschutzmittels ist vorzugsweise ein Kalium- und/oder Natriumalkylarylsulfonat mit einer oder mehreren, vorzugsweise 1 oder 2 Sulfonatgruppen ($SO_3K$- oder $SO_3Na$-Gruppen), einer oder mehreren, vorzugsweise einer oder zwei Alkylgruppen mit 5 bis 18, vorzugsweise 12 bis 18 C-Atomen, und einem oder mehreren, vorzugsweise einem oder zwei Benzolringen. Bevorzugt sind Kalium- und/oder Natriumalkylbenzolsulfonate mit 12 bis 18 C-Atomen in der Alkylgruppe (sie besitzen eine $SO_3K$- der $SO_3Na$-Gruppe und eine Alkylgruppe). Da bei der Herstellung von Alkylarylsulfonaten auch von Kohlenwasserstoff-Gemischen ausgegangen wird, wie sie beispielsweise bei der Erdöldestillation als Fraktionen anfallen, kann die Alkylgruppe auch derartige Gemisch darstellen; dabei beträgt die Anzahl der Kohlenstoffatome vorzugsweise 12 bis 18 (das ist eine mittlere Anzahl von 15). Die als Komponente c) zu verwendenden Alkalimetallalkylarylsulfonate sind bekannt und im Handel erhältlich (vgl. US-Patentschrift 4,358,389).

Die Komponente d) umfaßt Korrosionsinhibitoren, wie sie für Flüssigkeiten auf der Basis von Glykolen und Wasser gebräuchlich sind. Geeignete Korrosionsinhibitoren sind solche aus der Gruppe der Alkalisalze von Fettsäuren, vorzugsweise das Kalium- oder Natriumsalz der Laurin-, Palmitin-, Stearin-, Benzoe- und Ölsäure; aus der Gruppe der Mono- und Dialkylamine (gegebenenfalls alkoxyliert) und deren Salze mit Mineral- oder Fettsäure, vorzugsweise Butyl-,Hexyl-, Octyl-, Isononyl-, Oleyl-, Dipropyl- und Dibutylamin; und aus der Gruppe der Triazole, vorzugsweise Benztriazol und Tolytriazol. Von den genannten Korrosionsinhibitoren werden vorzugsweise die Triazole eingesetzt; besonders bevorzugt ist Benztriazol.

Die Komponente e), mit der der pH-Wert des erfindungsgemäßen Mittels auf 7,5 bis 11, vorzugsweise 8 bis 10 eingestellt wird, besteht aus je einem Vertreter von drei Gruppen von alkalischen Verbindungen. Die drei Gruppen umfassen $e_1$) Ammoniak, Monoethanolamin, Diethanolamin oder Triethanolamin oder eine Mischung von zwei oder mehreren dieser Verbindungen; $e_2$) KOH und $e_3$) ein anderes Alkalimetallhydroxid als KOH, vorzugsweise NaOH. Die Vertreter der drei Gruppen von alkalischen Verbindungen werden, wie oben angegeben, in einer jeweils bestimmten Menge eingesetzt (ausgedrückt in Gewichtsprozenten, bezogen auf das Gewicht des fertigen Mittels). Entscheidend ist auch, daß der angegebene pH-Wert erreicht wird. Sollte also z. B. bei Einsatz der jeweils kleinsten Menge der drei Vertreter der angegebene pH-Wert nicht erreicht werden, so ist von mindestens einem davon eine entsprechend höhere Menge zu nehmen. Würde andererseits bei Einsatz der jeweils größten Menge der drei Vertreter ein höherer pH-Wert als 11, vorzugsweise 10, vorliegen, wäre mindestens einer der drei Vertreter in einer entsprechend geringeren Menge zu nehmen. Es ist vorteilhaft, daß KOH und das weitere Alkalimetallhydroxid (beispielsweise NaOH) innerhalb der angegebenen Mengenbereiche im Gewichtsverhältnis von mindestens 2 : 1 eingesetzt werden, daß also auf einen Gewichtsteil NaOH (als dem weiteren Alkalimetallhydroxid) mindestens zwei Gewichtsteile KOH vorliegen. Die Amine und das Ammoniak sowie die Alkalimetallhydroxide werden vorzugsweise in Form einer 10 bis 40 gew.-%igen wäßrigen Lösung eingesetzt.

Die Komponente f) ist Wasser. Es wird vorzugsweise ein beispielsweise durch Behandlung mit Ionenaustauschern oder durch Destillation entsalztes Wasser verwendet.

Die Herstellung des erfindungsgemäßen Enteisungs- und Vereisungsschutzmittels erfolgt im Prinzip durch Zusammenmischen der einzelnen Komponenten in beliebiger Reihenfolge. Dies kann beispielsweise in einem mit Rührer ausgestatteten Behälter, gegebenenfalls unter Erwärmen bis auf etwa 60 °C, vorgenommen werden.

Nach einer vorteilhaften Herstellungsweise, mit der eine relativ rasche Auflösung der einzelnen Komponenten zu erreichen ist, wird wie folgt vorgegangen:

In einem Behälter wird bei Raumtemperatur das Wasser (Komponente f) vorgelegt und unter Rühren der Verdicker (Komponente b) zugegeben. Nach der Zugabe wird zweckmäßigerweise für einige Zeit weitergerührt, bis eine homogene Lösung vorliegt. Anschließend wird unter Rühren das Alkylarylsulfonat (Komponente c) und der Korrosionsinhibitor (Komponente d) dazugemischt und darauf ebenfalls unter Rühren das Glykol (Komponente a) eingebracht. Nun wird wiederum unter Rühren das Neutralisationsmittel (Komponente e) dazugegeben, wobei das Kaliumhydroxid als letztes der drei Neutralisationsmittel genommen wird, um den angegebenen pH-Wert einzustellen.

Das erfindungsgemäße Enteisungs- und Vereisungsschutzmittel zeichnet sich durch eine lange Holdover-Zeit, ein gutes Viskositätsverhalten, optimale rheologische Eigenschaften, gute Thermostabilität und eine hohe Scherstabilität aus. Es besitzt auch eine relativ hohe Gefrierpunktsdepression, eine gute Netzwirkung, eine nur geringe Hydrophilie, hohe Temperaturbeständigkeit, eine sehr lange Lagerungsmöglichkeit, auch bei hohen Temperaturen, und eine gute Antikorrosivität. Generell weist es eine ausgezeichnete Verträglichkeit mit allen Flugzeugwerkstoffen auf, wie das von den Flugzeugherstellern gefordert wird. Bei der Aufbringung auf Flugzeuge zeichnet es sich ferner durch eine gute Versprühbarkeit und die sehr günstigen Abfließeigenschaften während des Startes des Flugzeuges aus. Das neue Mittel erfüllt darüber hinaus auch die eingangs erwähnten Forderungen für den Einsatz bei Temperaturen von -15 °C und weniger. Es ist auch in arktischen Gegenden problemlos einsetzbar und zeigt die bei diesen tiefen Temperaturen notwendigen besonderen Eigenschaften. Es besitzt insbesondere auch bei tiefen Temperaturen und geringen Schergeschwindigkeiten ein optimales Viskositätsverhalten und gewährleistet damit das gewünschte rasche Abfließen während des Startvorganges auch bei diesen extremen Bedingungen.

Bei der Anwendung des erfindungsgemäßen Enteisungs- und Vereisungsschutzmittels wird dieses zweckmäßigerweise noch mit Wasser verdünnt, vorzugsweise im Verhältnis von 75 (Mittel) : 25 (Wasser) oder 50 : 50. In dieser verdünnten Form wird es mit den üblichen Geräten auf die zu behandelnden Flächen aufgesprüht. Bei der Flugzeugenteisung wird die verdünnte Lösung in der Regel vor dem Aufsprühen auf 50 bis 95 °C erwärmt. Zur Konservierung der enteisten Flächen wird zweckmäßigerweise das unverdünnte Produkt eingesetzt.

Die Erfindung wird nun an Hand von Beispielen noch näher erläutert:

Beispiel 1

Es wurde ein erfindungsgemäßes Mittel hergestellt durch Mischen der folgenden Komponenten:

a) 40,00 Gew.-% Diethylenglykol und
10,00 Gew.-% Propylenglykol
b) 0,03 Gew.-% von einem vernetzten Natriumacrylat/Acrylamid-Copolymeren, bestehend im wesentlichen aus 20 Gew.-% polymerisiertem Natriumacrylat
78 Gew.-% polymerisiertem Acrylamid und
2 Gew.-% polymerisiertem Vernetzer (hergestellt nach dem Verfahren der US-Patentschrift 4,237,249) und
0,20 Gew.-% von einem vernetzten Acrylsäurepolymeren bestehend im wesentlichen aus 98 Gew.-% polymerisierter Acrylsäure und 2 Gew.-% polymerisiertem Vernetzer (das Gewichtsverhältnis der beiden Polymeren ist also 1 : 6,6); die beiden Polymeren hatten, jeweils in einer 0,5 gew.-%igen wäßrigen Lösung von 20 °C und pH-Wert 7, eine Brookfield-Viskosität bei 20 UpM von 45 000 mPa s und ein laminares Strömungsverhalten bis zu einer Schergeschwindigkeit von 20 000 s$^{-1}$
c) 0,15 Gew.-% Natrium-Alkylbenzolsulfonat mit einer mittleren Anzahl von Kohlenstoffatomen in der Alkylgruppe von 15
d) 0,03 Gew.-% Benztriazol
e) 0,05 Gew.-% Triethanolamin
0,03 Gew.-% Natriumhydroxid und
0,11 Gew.-% Kaliumhydroxid
und
f) 49,40 Gew.-% Wasser.

Das Mischen der Komponenten a) bis f) wurde in einem Behälter mit Rührer bei Raumtemperatur durchgeführt. Es wurde der Großteil des Wassers vorgelegt und unter Rühren der Verdicker, das sind die beiden vernetzten Acrylpolymeren, dazugegeben. Nach dieser Zugabe wurde solange weitergerührt, bis eine homogene Lösung vorlag. Nun wurden das Alkylbenzolsulfonat, das Glykol, der Korrosionsinhibitor und das Neutralisationsmittel dazugemischt und es wurde wiederum solange weitergerührt, bis eine homogene Lösung vorlag. Die drei Neutralisationsmittel wurden in der angegebenen Reihenfolge eingemischt, wobei das Natriumhydroxid und das Kaliumhydroxid in Form einer etwa 30 gew.-%igen wäßrigen Lösung, die mit dem restlichen Wasser bereitet worden war, eingesetzt wurden.
Die fertige Mischung hatte einen pH-Wert von 8.
Das erfindungsgemäße Enteisung- und Vereisungsschutzmittel hatte die folgenden Eigenschaften:
Die Holdovertime nach dem High Humidity Holdover Test (nachstehend Test 1 genannt) betrug über 8 Stunden.
Die Holdovertime nach dem Freezing Rain Endurance Test (nachfolgend Test 2 genannt) betrug 37 Minuten (die Durchführung der beiden Tests siehe Seite 21).
Das Strömungsverhalten im Rotationsviskosimeter bei Schergeschwindigkeiten bis zu 20 000 s$^{-1}$ war laminar.
Die Viskositätswerte bei verschiedenen Temperaturen und sehr niedrigen Schergeschwindigkeiten (die Brookfield-Viskositäten bei 0,3 UpM, entsprechend einer Schergeschwindigkeit von 0,08 s$^{-1}$) sind nachstehend zusammengefaßt:

EP 0 231 869 B1

| Temperatur (°C) | Brookfield-Viskosität bei 0,3 UpM (mPa s) |
|---|---|
| +20 | 9 000 |
| 0 | 15 000 |
| −10 | 20 000 |
| −25 | 30 000 |
| −35 | 45 000. |

Beispiel 2

Es wurde ein erfindungsgemäßes Mittel hergestellt durch Mischen der folgenden Komponenten:

a) 58,00 Gew.-% Diethylenglykol
b) 0,08 Gew.-% von einem vernetzten Natriumacrylat/Acrylamid Copolymeren, bestehend im wesentlichen aus 37 Gew.-% polymerisiertem Natriumacrylat, 60 Gew.-% polymerisiertem Acrylamid und 3 Gew.-% polymerisiertem Vernetzer (hergestellt nach dem Verfahren der US-Patentschrift 4,237,249) und
0,62 Gew.-% von einem vernetzten Acrylsäurepolymeren, bestehend im wesentlichen aus 97 Gew.-% polymerisierter Acrylsäure und 3 Gew.-% polymerisiertem Vernetzer (das Gewichtsverhältnis der beiden Polymeren ist also 1 : 7,8); die beiden Polymeren hatten, jeweils in einer 0,5 gew.-%igen wäßrigen Lösung von 20 °C und pH-Wert 7, eine Brookfield-Viskosität bei 20 UpM von 15 000 mPa s und ein laminares Strömungsverhalten bis zu einer Schergeschwindigkeit von 20 000 s$^{-1}$
c) 0,50 Gew.-% Natrium-Alkylbenzolsulfonat mit einer mittleren Anzahl von Kohlenstoffatomen in der Alkylgruppe von 15
d) 0,10 Gew.-% Benztriazol
e) 0,40 Gew.-% Triethanolamin
0,08 Gew.-% Natriumhydroxid und
0,35 Gew.-% Kaliumhydroxid
und
f) 39,87 Gew.-% Wasser.

Das Mischen der Komponenten a) bis f) erfolgte wie in Beispiel 1.
Die fertige Mischung hatte einen pH-Wert von 9,5. Das erfindungsgemäße Enteisungs- und Vereisungsschutzmittel hatte die folgenden Eigenschaften:
Die Holdovertime nach Test 1 betrug über 8 Stunden.
Die Holdovertime nach Test 2 betrug 33 Minuten.
Das Strömungsverhalten im Rotationsviskosimeter bei Schergeschwindigkeiten bis zu 20 000 s$^{-1}$ war laminar.
Die Viskositätswerte, gemessen wie im Beispiel 1, sind nachstehend zusammengefaßt:

| Temperatur (°C) | Brookfield-Viskosität bei 0,3 UpM (mPa s) |
|---|---|
| +20 | 11 000 |
| 0 | 15 000 |
| −10 | 17 000 |
| −25 | 25 000 |
| −35 | 40 000. |

Beispiel 3

Es wurde ein erfindungsgemäßes Mittel hergestellt durch Mischen der folgenden Komponenten:

a) 40,00 Gew.-% Propylenglykol

7

b) 0,04 Gew.-% von einem vernetzten Natriumacrylat/Acrylamid-Copolymeren, bestehend im wesentlichen aus 10 Gew.-% polymerisiertem Natriumacrylat 89 Gew.-% polymerisiertem Acrylamid und 1 Gew.-% polymerisiertem Vernetzer (hergestellt nach dem Verfahren der US-Patentschrift 4,237,249) und 0,10 Gew.-% von einem vernetzten Acrylsäurepolymeren, bestehend im wesentlichen aus 97 Gew.-% polymerisierter Acrylsäure und 3 Gew.-% polymerisiertem Vernetzer (das Gewichtsverhältnis der beiden Polymeren ist also 1 : 2,5); die beiden Polymeren hatten, jeweils in einer 0,5 gew.-%igen wäßrigen Lösung von 20 °C und pH-Wert 7, eine Brookfield-Viskosität bei 20 UpM von 8 000 mPa s bzw. 50 000 mPa s und ein laminares Strömungsverhalten bis zu einer Schergeschwindigkeit von 20 000 s$^{-1}$

c) 0,07 Gew.-% Natrium-Alkylbenzolsulfonat mit einer mittleren Anzahl von Kohlenstoffatomen in der Alkylgruppe von 15
d) 0,02 Gew.-% Benztriazol
e) 0,03 Gew.-% Monoethanolamin
0,02 Gew.-% Natriumhydroxid und
0,10 Gew.-% Kaliumhydroxid
und
f) 59,62 Gew.-% Wasser.

Das Mischen der Komponenten a) bis f) erfolgte wie in Beispiel 1.
Die fertige Mischung hatte einen pH-Wert von 8.
Das erfindungsgemäße Enteisungs- und Vereisungsschutzmittel hatte die folgenden Eigenschaften:
Die Holdovertime nach Test 1 betrug über 8 Stunden.
Die Holdovertime nach Test 2 betrug 32 Minuten.
Das Strömungsverhalten im Rotationsviskosimeter bei Schergeschwindigkeiten bis zu 20 000 s$^{-1}$ war laminar.
Die Viskositätswerte,gemessen wie in Beispiel 1, sind nachstehend zusammengefaßt:

| Temperatur (°C) | Brookfield-Viskosität bei 0,3 UpM (mPa s) |
|---|---|
| +20 | 9 000 |
| 0 | 17 000 |
| −10 | 21 000 |
| −25 | 36 000 |
| −35 | 47 000. |

Beispiel 4

Es wurde ein erfindungsgemäßes Mittel hergestellt durch Mischen der folgenden Komponenten:

a) 45,00 Gew.-% Diethylenglykol und
24,00 Gew.-% Propylenglykol
b) 0,15 Gew.-% von einem vernetzten Natriumacrylat/Acrylamid-Copolymeren, bestehend im wesentlichen aus 48 Gew.-% polymerisiertem Natriumacrylat, 50 Gew.-% polymerisiertem Acrylamid und 2 Gew.-% polymerisiertem Vernetzer (hergestellt nach dem Verfahren der US-Patentschrift 4,237,249) und 0,75 Gew.-% von einem vernetzten Acrylsäurepolymeren, bestehend im wesentlichen aus 95 Gew.-% polymerisierter Acrylsäure und 5 Gew.-% polymerisiertem Vernetzer (das Gewichtsverhältnis der beiden Polymeren ist also 1 : 5); die beiden Polymeren hatten, jeweils in einer 0,5 gew.-%igen wäßrigen Lösung von 20 °C und pH-Wert 7, eine Brookfield-Viskosität bei 20 UpM von 60 000 mPa s und ein laminares Strömungsverhalten bis zu einer Schergeschwindigkeit von 20 000 s$^{-1}$

c) 0,80 Gew.-% Natrium-Alkylbenzolsulfonat mit einer mittleren Anzahl von Kohlenstoffatomen in der Alkylgruppe von 15
d) 0,04 Gew.-% Benztriazol
e) 0,80 Gew.-% Diethanolamin
0,12 Gew.-% Natriumhydroxid und
0,30 Gew.-% Kaliumhydroxid
und
f) 28,04 Gew.-% Wasser.

Das Mischen der Komponenten a) bis f) erfolgt wie in Beispiel 1.
Die fertige Mischung hatte einen pH-Wert von 10,5.

Das erfindungsgemäße Enteisungs- und Vereisungsschutzmittel hatte die folgenden Eigenschaften:
Die Holdovertime nach Test 1 betrug über 8 Stunden.
Die Holdovertime nach Test 2 betrug 36 Minuten.
Das Strömungsverhalten im Rotationsviskosimeter bei Schergeschwindigkeiten bis zu 20 000 s$^{-1}$ war laminar.
Die Viskositätswerte, gemessen wie in Beispiel 1, sind nachstehend zusammengefaßt:

| Temperatur (°C) | Brookfield-Viskosität bei 0,3 UpM (mPa s) |
|---|---|
| +20 | 10 000 |
| 0 | 18 000 |
| −10 | 22 000 |
| −25 | 32 000 |
| −35 | 48 000. |

Beispiel 5

Beispiel 2 wurde wiederholt, mit dem Unterschied, daß als Komponente b) ein vernetztes Natriumacrylat/Acrylamid-Copolymeres, bestehend im wesentlichen aus 78 Gew.-% polymerisiertem Natriumacrylat, 20 Gew.-% polymerisiertem Acrylamid und 2 Gew.-% polymerisiertem Vernetzer (hergestellt nach dem Verfahren der US-Patentschrift 4,237,249), und als Komponente e) 0,40 Gew.-% Ammoniak, 0,08 Gew.-% Natriumhydroxid und 0,35 Gew.-% Kaliumhydroxid eingesetzt wurden.
Die fertige Mischung hatte bezüglich pH-Wert, Holdovertime und Strömungsverhalten im Rotationsviskosimeter die gleichen Werte und Eigenschaften wie die Mischung des Beispiels 2. Ihre Viskositätswerte, gemessen wie in Beispiel 1, sind nachstehend zusammengefaßt:

| Temperatur (°C) | Brookfield-Viskosität bei 0,3 UpM (mPa s) |
|---|---|
| +20 | 10 000 |
| 0 | 14 000 |
| −10 | 16 000 |
| −25 | 20 000 |
| −35 | 32 000. |

Beispiel 6

Beispiel 4 wurde wiederholt, mit dem Unterschied, daß als Komponente b) ein vernetztes Natriumacrylat/Acrylamid-Copolymeres, bestehend im wesentlichen aus 88 Gew.-% polymerisiertem Natriumacrylat, 10 Gew.-% polymerisiertem Acrylamid und 2 Gew.-% polymerisiertem Vernetzer (hergestellt nach dem Verfahren der US-Patentschrift 4, 237,249), und als Komponente e) 0,80 Gew.-% Ammoniak, 0,12 Gew.-% Natriumhydroxid und 0,30 Gew.-% Kaliumhydroxid eingesetzt wurden.
Die fertige Mischung hatte bezüglich pH-Wert, Holdovertime und Strömungsverhalten im Rotationsviskosimeter die gleichen Werte und Eigenschaften wie die Mischung des Beispiels 4.
Ihre Viskositätswerte, gemessen wie in Beispiel 1, sind nachstehend zusammengefaßt:

| Temperatur<br>(°C) | Brookfield-Viskosität bei 0,3 UpM<br>(mPa s) |
|---|---|
| +20 | 9 000 |
| 0 | 16 000 |
| -10 | 20 000 |
| -25 | 25 000 |
| -35 | 32 000. |

Vergleichsbeispiel

Es wurde ein Mittel nach US-Patentschrift 4,358,389 hergestellt durch Mischen der folgenden Komponenten:

a) 58,00 Gew.-% Diethylenglykol
b) 0,70 Gew.-% von einem vernetzten Acrylsäurepolymeren, bestehend im wesentlichen aus 97 Gew.-% polymerisierter Acrylsäure und 3 Gew.-% polymerisiertem Vernetzer; das Polymere hatte in einer 0,5 gew.-%igen wäßrigen Lösung von 20 °C und pH-Wert 7 eine Brookfield-Viskosität bei 20 UpM von 15 000 mPa s und ein laminares Strömungsverhalten bis zu einer Schergeschwindigkeit von 20 000 s$^{-1}$
c) 0,50 Gew.-% Natrium-Alkylbenzolsulfonat mit einer mittleren Anzahl von Kohlenstoffatomen in der Alkylgruppe von 15
d) 0,10 Gew.-% Benztriazol
e) 0,43 Gew.-% Kaliumhydroxid
und
f) 40,27 Gew.-% Wasser.

Das Mischen der Komponenten a) bis f) erfolgte analog Beispiel 1.
Die fertige Mischung hatte einen pH-Wert von 9,4.
Das Enteisungs- und Vereisungsschutzmittel hatte die folgenden Eigenschaften:
Die Holdovertime nach Test 1 betrug über 8 Stunden.
Die Holdovertime nach Test 2 betrug 36 Minuten.
Das Strömungsverhalten im Rotationsviskosimeter bei Schergeschwindigkeiten bis zu 20 000 s$^{-1}$ war laminar.
Die Viskositätswerte bei verschiedenen Temperaturen und sehr niedrigen Schergeschwindigkeiten (die Brookfield-Viskosität bei 0,3 UpM, entsprechend einer Schergeschwindigkeit von 0,08 s$^{-1}$) sind nachstehend zusammengefaßt:

| Temperatur<br>(°C) | Brookfield-Viskosität bei 0,3 UpM<br>(mPa s) |
|---|---|
| +20 | 11 000 |
| 0 | 18 000 |
| -10 | 27 000 |
| -25 | 58 000 |
| -35 | 85 000. |

Die Bestimmung der Holdovertime erfolgte nach der neuesten sehr strengen Methode, nämlich nach den von Association of European Airlines (AEA) ausgegebenen "Recommendations for de-icing/anti-icing of aircraft on ground", 2nd Edition, September 1st, 1983, Part 1, i.e. "Material specification de-/anti-icing fluid, aircraft". Danach wird bei Flüssigkeiten vom Typ II (Enteisungs- und Vereisungsschutz-Flüssigkeiten) die Holdovertime nach dem sogenannten "High Humidity Holdover"-Test und "Freezing Rain Endurance"-Test bestimmt. Der erstgenannte Test ist erfüllt, wenn die Holdovertime mindestens 8 Stunden beträgt, und der zweite Test ist erfüllt, wenn die Holdovertime mindestens 30 min beträgt.
Die erfindungsgemäßen Beispiele und das Vergleichsbeispiel zeigen unter anderem das nachstehend zusammengefaßte Ergebnis:

Das aus der US-Patentschrift 4,358,389 bekannte Enteisungs- und Vereisungsschutzmittel weist zwar das geforderte laminare Strömungsverhalten und gute Holdovertime-Werte auf und es erfüllt auch die derzeit geforderte Viskosität bei der sehr niedrigen Schergeschwindigkeit von 0,08 s⁻¹ (entsprechend 0,3 UpM am Brookfield-Viskosimeter) und bei Temperaturen bis zu etwa -15 °C; seine Viskosität bei tieferen Temperaturen als etwa -15 °C und insbesondere bei Temperaturen von etwa -20 bis etwa -35 °C und der genannten niedrigen Schergeschwindigkeit liegt jedoch beträchtlich über den geforderten Werten. So weist das bekannte Mittel bei -25 °C und der genannten niedrigen Schergeschwindigkeit eine Viskosität von beträchtlich über 50 000 mPa s auf (nach der Vorschrift der Association of European Airlines darf diese Viskosität maximal 50 000 mPa s betragen).

Demgegenüber besitzt das erfindungsgemäße Enteisungs- und Vereisungsschutzmittel nicht nur gute Holdovertime-Werte, das geforderte laminare Strömungsverhalten und sehr gute (niedrige) Viskositätswerte bei niedriger Schergeschwindigkeit und bei Temperaturen bis zu etwa -15 °C, es erfüllt auch alle weiteren eingangs dargelegten Forderungen sowie die Forderungen der AEA in einem unerwartet hohen Ausmaß. So hat das erfindungsgemäße Mittel bei -25 °C und 0,08 s⁻¹ Schergeschwindigkeit Viskositätswerte (low shear viscosity bei -25 °C), die beträchtlich unter 50 000 mPa s liegen. Was das erfindungsgemäße Mittel besonders auszeichnet ist unter anderem, daß es auch noch bei -35 °C (eine Temperatur, die in den Vorschriften der AEA gar nicht mehr enthalten ist) eine relativ niedrige Viskosität aufweist, und dies auch bei der sehr niedrigen Schergeschwindigkeit von 0,08 s⁻¹; bei diesen extremen Bedingungen liegt seine Viskosität um einiges unter 50 000 mPa s. Damit gewährleistet das erfindungsgemäße Enteisungs- und Vereisungsschutzmittel auch bei Temperaturen bis zu -35 °C einen sicheren Start des Flugzeugs.

**Patentansprüche**

1. Enteisungs- und Vereisungsschutzmittel für Flugzeuge auf der Basis von Glykolen und Wasser und mit vernetzten Acrylpolymeren als Verdicker, bestehend im wesentlichen aus

a) 40 bis 70 Gew.-% von einem Glykol aus der Gruppe der Alkylenglykole mit 2 bis 3 C-Atomen und Oxalkylenglykole mit 4 bis 6 C-Atomen,

b) 0,1 bis 1 Gew.-% von vernetzten Acrylpolymeren, bestehend aus 1 Gew.-Teil von einem vernetzten Copolymeren aus Acrylsäure oder einem Alkalimetallacrylat und Acrylamid mit 10 bis 90 Gew.-% copolymerisierten Einheiten der Acrylsäure oder des Alkalimetallacrylates und 10 bis 90 Gew.-% copolymerisierten Einheiten des Acrylamids und 1 bis 10 Gew.-Teilen von einem vernetzten Homopolymeren der Acrylsäure oder eines Alkalimetallacrylates, mit der Maßgabe, daß das Homopolymere und das Copolymere jeweils eine Viskosität von 5 000 bis 70 000 mPa s und ein laminares Strömungsverhalten bei einer Schergeschwindigkeit von 0 bis 20 000 s⁻¹ besitzen, wobei die Viskosität und das laminare Strömungsverhalten jeweils mit Hilfe einer 0,5 gew.-%igen wäßrigen Lösung von 20 °C und einem pH-Wert von 7 mit einem Brookfield-Viskosimeter bei 20 UpM bzw. mit einem Rotationsviskosimeter für Schergeschwindigkeiten bis zu 20 000 s⁻¹ gemessen worden ist,

c) 0,05 bis 1 Gew.-% von einem Tensid aus der Gruppe der Alkalimetall-Alkylarylsulfonate,

d) 0,01 bis 1 Gew.-% von mindestens einem Korrosionsinhibitor,

e) den drei folgenden basischen Verbindungen e₁ bis e₃ in den angegebenen Mengen zur Einstellung des pH-Wertes des Mittels auf 7,5 bis 11,

e₁) 0,01 bis 1 Gew.-% Ammoniak, Monoethanolamin, Diethanolamin oder Triethanolamin oder eine Mischung davon,

e₂) 0,05 bis 0,7 Gew.-% Kaliumhydroxid und

e₃) 0,01 bis 0,5 Gew.-% von einem weiteren Alkalimetallhydroxid und aus

f) Wasser als den restlichen Gewichtsprozenten, Gewichtsprozente jeweils bezogen auf das Gewicht des Mittels.

2. Mittel nach Anspruch 1, dadurch gekennzeichnet, daß das vernetzte Copolymere aus 20 bis 80 Gew.-% copolymerisierten Einheiten von Acrylsäure oder Alkalimetallacrylat und 20 bis 80 Gew.-% copolymerisierten Einheiten von Acrylamid besteht.

3. Mittel nach einem der Ansprüche 1 oder 2, dadurch gekennzeichnet, daß auf 1 Gew.-Teil von dem vernetzten Copolymeren 3 bis 8 Gew.-Teile von dem vernetzten Homopolymeren vorhanden sind.

4. Mittel nach einem oder mehreren der Ansprüche 1 bis 3, dadurch gekennzeichnet, daß das vernetzte Homopolymere und das vernetzte Copolymere jeweils eine Viskosität von 10 000 bis 50 000 mPa s besitzen.

5. Mittel nach einem oder mehreren der Ansprüche 1 bis 4, dadurch gekennzeichnet, daß das vernetzte Homopolymere ein vernetztes Acrylsäure-Homopolymeres ist und das vernetzte Copolymere ein vernetztes Alkalimetallacrylat/Acrylamid-Copolymeres ist.

6. Mittel nach einem oder mehreren der Ansprüche 1 bis 5, dadurch gekennzeichnet, daß das vernetzte Homopolymere und das vernetzte Copolymere 0,1 bis 10 Gew.-%, bezogen auf das Homo- bzw. Copolymere, Vernetzer enthält.

7. Mittel nach einem oder mehreren der Ansprüche 1 bis 5, dadurch gekennzeichnet, daß das vernetzte Homopolymere und das vernetzte Copolymere 1 bis 5 Gew.-%, bezogen auf das Homo- bzw. Copolymere, Vernetzer enthält.

8. Mittel nach einem oder mehreren der Ansprüche 1 bis 7, dadurch gekennzeichnet, daß es die Komponenten a) bis f) in den nachstehend angegebenen Mengen enthält:

a) 50,00 bis 60,00 Gew.-%,

b) 0,20 bis 0,70 Gew.-%,

c) 0,10 bis 0,70 Gew.-%,

d) 0,03 bis 0,50 Gew.-%,

$e_1$) 0,05 bis 0,50 Gew.-%,

$e_2$) 0,07 bis 0,40 Gew.-%,

$e_3$) 0,03 bis 0,15 Gew.-% und

f) Wasser als den Rest.

## Claims

1. De-icing and anti-icing agent for aircraft, based on glycols and water and containing crosslinked acrylic polymers as the thickener, composed essentially of:

a) 40 to 70% by weight of a glycol belonging to the group of alkylene glycols having 2 to 3 carbon atoms and oxalkylene glycols having 4 to 6 carbon atoms,

b) 0.1 to 1% by weight of crosslinked acrylic polymers composed of 1 part by weight of a crosslinked copolymer formed from acrylic acid or an alkali metal acrylate and acrylamide and containing 10 to 90% by weight of copolymerised units of acrylic acid or alkali metal acrylate and 10 to 90% by weight of copolymerised units of acrylamide and 1 to 10 parts by weight of a crosslinked homopolymer of acrylic acid or an alkali metal acrylate, subject to the proviso that the homopolymer and the copolymer each have a viscosity of 5000 to 70.000 mPas and a laminar flow behavior at a shear rate of 0 to 20.000 seconds$^{-1}$, the viscosity and the laminar flow behavior each being determined using a 0.5% strength by weight aqueous solution at 20°C and a pH of 7 by means of a Brookfield viscometer at 20 r.p.m. and a rotational visometer for shear rates of up to 20.000 seconds$^{-1}$, respectively,

c) 0.05 to 1% by weight of a surfactant belonging to the group of alkali metal alkylarylsulfonates,

d) 0.01 to 1% by weight of at least one corrosion inhibitor,

e) the three following basic compounds $e_1$) to $e_3$) in the amounts indicated, in order to adjust the pH of the agent to a value of 7.5 to 11,

$e_1$) 0.01 to 1% by weight of ammonia, monoethanolamine, diethanolamine or triethanolamine or a mixture thereof,

$e_2$) 0.05 to 0.7% by weight of potassium hydroxide and

$e_3$) 0.01 to 0.5% by weight of a further alkali metal hydroxide, and

f) water as the remaining percentage by weight, the percentages by weight relating in each case to the weight of the agent.

2. An agent as claimed in claim 1, wherein the crosslinked copolymer is composed of 20 to 80% by weight of copolymerised units of acrylic acid or an alkali metal acrylate and 20 to 80% by weight of copolymerised units of acrylamide.

3. An agent as claimed in claims 1 or 2, wherein 3 to 8 parts by weight of the crosslinked homopolymer are present for 1 part by weight of the crosslinked copolymer.

4. An agent as claimed in one or more of the claims 1 to 3, wherein the crosslinked homopolymer and the crosslinked copolymer each have a viscosity of 10.000 to 50.000 mPas.

5. An agent as claimed in one or more of the claims 1 to 4, wherein the crosslinked homopolymer is a crosslinked acrylic acid homopolymer and the crosslinked copolymer is a crosslinked alkali metal acrylate/acrylamide copolymer.

6. An agent as claimed in one or more of the claims 1 to 5, wherein the crosslinked homopolymer and the crosslinked copolymer contain 0.1 to 10% by weight of crosslinking agent, relative to the homopolymer or copolymer respectively.

7. An agent as claimed in one or more of the claims 1 to 5, wherein the crosslinked homopolymer and the crosslinked copolymer contain 1 to 5% by weight of crosslinking agent, relative to the homopolymer or copolymer, respectively.

8. An agent as claimed in one or more of the claims 1 to 7, which contains the components a) to f) in the quantities stated below:

a) 50.00 to 60.00% by weight

b) 0.20 to 0.70% by weight

c) 0.10 to 0.70% by weight

d) 0.03 to 0.50% by weight

$e_1$) 0.05 to 0.50% by weight

$e_2$) 0.07 to 0.40% by weight

$e_3$) 0.03 to 0.15% by weight

f) water as the remainder.

**Revendications**

1. Produit de dégivrage et protection contre le givre pour avions, à base de glycols et d'eau et contenant comme épaississants des polymères acryliques réticulés, produit qui comprend essentiellement, en proportions pondérales:

a) de 40 à 70% d'un glycol du groupe des alkylène-glycols à 2 ou 3 atomes de carbone et d'oxalkylène-glycols ayant de 4 à 6 atomes de carbone,

b) de 0,1 à 1% de polymères acryliques réticulés formés de 1 partie en poids d'un copolymère réticulé d'acide acrylique ou d'un acrylate de métal alcalin et d'acrylamide, ayant de 10 à 90% de motifs copolymérisés d'acide acrylique ou de l'acrylate de métal alcalin, et de 10 à 90% de motifs copolymérisés d'acrylamide, et de 1 à 10 parties d'un homopolymère réticulé de l'acide acrylique ou d'un acrylate de métal alcalin, avec la condition que l'homopolymère et le copolymère aient chacun une viscosité de 5000 à 70 000 mPa.s, et un comportement d'écoulement laminaire à un gradient de vitesse de cisaillement de 0 à 20 000 s$^{-1}$, viscosités et comportements d'écoulement laminaire que l'on détermine sur une solution aqueuse à 0,5% à la température de 20°C et à pH 7 au viscosimètre Brookfield à 20 tours/minute et avec un viscosimètre à rotation pour des gradients de vitesse de cisaillement pouvant s'élever jusqu'à 20 000 s$^{-1}$,

c) de 0,05 à 1% d'un agent surfactif du groupe des alkylarylsulfonates de métaux alcalins,

d) de 0,01 à 1% d'un ou de plusieurs inhibiteurs de corrosion,

e) les trois composés basiques suivants $e_1$ à $e_3$ dans les proportions indiquées pour régler le pH du produit entre 7,5 et 11, à savoir:

$e_1$) 0,01 à 1% d'ammoniac, de monoéthanolamine, de diéthanolamine ou de triéthanolamine ou d'un mélange de ces composés comme premier composé basique,

$e_2$) 0,05 à 0,7% d'hydroxyde de potassium comme second composé basique, et

$e_3$) 0,01 à 0,5% d'un autre hydroxyde de métal alcalin différent comme troisième composé basique, et

f) de l'eau comme complément à 100%, toutes proportions rapportées au poids du produit.

2. Produit selon la revendication 1, caractérisé en ce que le copolymère réticulé est constitué de 20 à 80% de motifs copolymérisés d'acide acrylique ou de l'acrylate de métal alcalin et de 20 à 80% de motifs copolymérisés d'acrylamide.

3. Produit selon la revendication 1 ou 2, caractérisé en ce qu'il comprend de 3 à 8 parties en poids de l'homopolymère réticulé par partie du copolymère réticulé.

4. Produit selon une ou plusieurs des revendications 1 à 3, caractérisé en ce que l'homopolymère réticulé et le copolymère réticulé ont chacun une viscosité de 10 000 à 50 000 mPa.s.

5. Produit selon une ou plusieurs des revendications 1 à 4, caractérisé en ce que l'homopolymère est un homopolymère d'acide acrylique réticulé et le copolymère un copolymère réticulé d'un acrylate de métal alcalin et d'acrylamide.

6. Produit selon une ou plusieurs revendications 1 à 5, caractérisé en ce que l'homopolymère et le copolymère réticulés contiennent chacun de 0,1 à 10% de leur poids du réticulant.

7. Produit selon l'une ou plusieurs des revendications 1 à 5, caractérisé en ce que l'homopolymère et le copolymère contiennent chacun de 1 à 5% de leur poids du réticulant.

8. Produit selon l'une ou plusieurs des revendications 1 à 7, caractérisé en ce qu'il contient les composants a) à f) dans les proportions pondérales suivantes:

a) de 50,000 à 60,000%,

b) de 0,20 à 0,70%,

c) de 0,10 à 0,70%,

d) de 0,03 à 0,50%,

$e_1$) de 0,05 à 0,50%,

$e_2$) de 0,07 à 0,40%,

$e_3$) de 0,03 à 0,15%, et

f) eau comme complément à 100%.